**Europäisches Patentamt**

**European Patent Office**

**Office européen des brevets**

(19)

(11) Veröffentlichungsnummer: **0 233 555 B1**

## EUROPÄISCHE PATENTSCHRIFT

(12)

(45) Veröffentlichungstag der Patentschrift: **18.12.91**

(51) Int. Cl.⁵: **B23C 3/16**

(21) Anmeldenummer: **87101577.2**

(22) Anmeldetag: **05.02.87**

(54) Verfahren zur spanabhebenden Bearbeitung eines in einem Gussteil angeordneten Kanals.

(30) Priorität: **06.02.86 DE 3603582**

(43) Veröffentlichungstag der Anmeldung:
**26.08.87 Patentblatt 87/35**

(45) Bekanntmachung des Hinweises auf die
Patenterteilung:
**18.12.91 Patentblatt 91/51**

(84) Benannte Vertragsstaaten:
**ES FR GB IT SE**

(56) Entgegenhaltungen:
**DE-A- 2 814 277**
**DE-B- 1 272 627**
**US-A- 3 145 696**
**US-A- 3 146 646**
**US-A- 4 246 812**

**SOVIET INVENTIONS ILLUSTRATED, Teil P/Q,
Woche B36, 17. Oktober 1979, Klasse P54, Nr.
H6570B/36, Derwent Publications Ltd, London, GB; & SU-A-634 864 (METAL CUT MACH
TOOL) 30-11-1978**

(73) Patentinhaber: **Bayerische Motoren Werke Aktiengesellschaft
Patentabteilung AJ-30 Postfach 40 02 40 Petuelring 130
W-8000 München 40(DE)**

(72) Erfinder: **Seidl, Jiri
Strassbergerstrasse 14
W-8000 München 40(DE)**

(74) Vertreter: **Bücken, Helmut
Bayerische Motoren Werke Aktiengesellschaft Postfach 40 02 40 Petuelring 130 -
AJ-30
W-8000 München 40(DE)**

**Beschreibung**

Die Erfindung geht gemäß dem Oberbegriff des unabhängigen Patentanspruches von der DE-OS 28 14 277 aus.

In dieser Druckschrift ist ein in seinem ventilseitigen Endbereich mittels eines rotierenden Werkzeuges spanabhebend bearbeiteter Einlaßkanal im Zylinderkopf einer Brennkraftmaschine gezeigt und beschrieben. Der im ventilseitigen Endbereich zylindrisch gestaltete Einlaßkanal geht stromauf über Kegelflächen in zum flanschseitigen Kanalende divergierende und einen im wesentlichen rechteckigen Kanal-Querschnitt begrenzende Wände über. Stromab schließt sich an den zylindrischen Kanalteil eine Ausnehmung zur Aufnahme eines Ventilsitzringes an. Der Ventilsitzring weist gegenüber der Öffnung des zylindrischen Kanalteils zur Ausnehmung hin einen relativ großen Innendurchmesser auf, so daß der zylindrische Kanalteil über einen relativ scharfkantigen Absatz mit dem Innendurchmesser des Ventilsitzringes in Verbindung steht. Dieser scharfkantige Absatz führt bei geöffnetem Einlaßventil zu ungünstigen Strömungsverhältnissen, wodurch Abgaszusammensetzung, Drehmoment, Leistung und Kraftstoffverbrauch nachteilig beeinflußt werden.

Die vorgenannten Nachteile sind mit einer im Bild 166 rechts unten, auf Seite 251 des 1963 in 2. Auflage im VDI-Verlag erschienenen Buches "Die Brennkraftmaschine" von Prof. K. Löhner gezeigten Ausführung eines venturirohrartigen Überganges des Einlaßkanals in den Innendurchmesser des Ventilsitzringes vermieden. Ein derartiger, idealer Übergang kann aus Kostengründen im allgemeinen nur bei kleinen Stückzahlen von Zylinderköpfen verwirklicht werden, und zwar mittels von Hand durchgeführter spangebender Bearbeitung (Handfräse). Dieses relativ teuere Verfahren hat den weiteren Nachteil, daß die Einlaßkanäle bei einer mehrzylindrigen Brennkraftmaschine nicht konturengleich ausfallen, was sich durch ungleiche Einströmverhältnisse wiederum ungünstig auf Leistung und Verbrauch auswirkt.

Um bei in Großserie gefertigten Zylinderköpfen eine venturirohrartige Gestaltung am ventilseitigen Ende der Einlaßkanäle zu erzielen, wird in der DE-AS 15 76 410 vorgeschlagen, den Ventilsitzring gegenüber herkömmlichen Sitzringen deutlich höher auszubilden und den venturirohrartigen Übergang ausschließlich am Innenumfang des Ventilsitzringes auszubilden. Zusätzlich ist zwischen dem längeren, lediglich in einer Ebene gekrümmten Einlaßkanalteil und dem hierzu abgewinkelten, den vorgenannten Ventilsitzring aufnehmenden kurzen Kanalteil ein mittels eines Profilfräsers erstellter Übergang vorgesehen. Trotz des hohen Aufwandes ergeben sich auch bei dieser bekannten Ausgestaltung zwischen den einzelnen Kanalteilen relativ scharfe Übergänge, die die Strömung der einströmenden Ladung ungünstig beeinflussen.

Die DE-AS 21 64 001 zeigt und beschreibt einen gegossenen Zylinderkopf für Brennkraftmaschinen mit einem Einlaßkanal, der am ventilseitigen Ende wiederum mit einem Ventilsitzring mit venturirohrartigem Innenumfang ausgerüstet ist. Zur Vermeidung scharfer Übergänge ist der Verlauf des Kanals entsprechend gewählt, wobei er sich über einen Teil seiner Erstreckung zum Ventilsitzring hin erweitert und die Innenfläche dieses Teiles aus Flächenabschnitten von verschiedenen Rotationskörpern gebildet ist. Für eine übliche maschinelle Bearbeitung mit rotierenden Werkzeugen sind die Rotationsflächen der aufeinanderfolgenden Abschnitte des Einlaßkanals nachfolgend ineinander einschreibbar.

Auch dieser Einlaßkanal weist trotz des hohen Bearbeitungsaufwandes über einen großen Umfangsbereich einen diskontinuierlichen Übergang zum venturirohrartigen Innenumfang des Ventilsitzringes auf, der Füllungsverluste bewirkt.

Ausgangspunkt für die Erfindung ist ein einstückiger, gegossener Zylinderkopf für eine Mehrzylinder-Brennkraftmaschine, wobei die Gaswechselkanäle mittels Stahlpinolen ausgeformt werden. Gleichheit der Konturen gleichartiger Gaswechselkanäle und deren jeweiliger, auf optimale Einströmverhältnisse in den Brennraum abgestellter räumlicher Verlauf im ventilsitzseitigen Endbereich sind jedoch mit Stahlpinolen bei vertretbarem Aufwand nicht zu erzielen. Für die erforderliche spanabhebende Bearbeitung dieses Kanalbereiches muß beim Guß ausreichendes Zusatzmaterial vorgesehen werden.

Der Erfindung liegt die Aufgabe zugrunde, für die spanabhebende Bearbeitung eines in einem Gußteil angeordneten Kanals, insbesondere eines Strömungskanals, ein Verfahren aufzuzeigen, bei dem mit einer geringen Anzahl an spanabhebenden Arbeitsgängen die Kontur des Kanalendbereiches im wesentlichen erstellt wird und der Kanal in seinem Übergangsquerschnitt zu einem anschließenden, fertigen Ventilsitzring dessen vom Innenumfang gebildeter Kontur bestmöglich angepaßt ist.

Diese Aufgabe wird mit den im Kennzeichen des unabhängigen Patentanspruches beschriebenen Verfahrenschritten gelöst. Mit der vorgeschlagenen Lösung kann bei größtmöglicher Wahl des Rotationsdurchmessers des Werkzeuges in Bezug auf den Innendurchmesser des Ventilsitzringes bereits eine bestmöglich angenäherte Kontur des Kanalendbereiches in vorteilhafter Weise in lediglich insgesamt zwei Bearbeitungsgängen bei translatorischem Vorschub erstellt werden. Da hierbei jede translatorische Bewegung des Werkzeuges für einen spanabhebenden Arbeitsgang ausgenützt wird, kann die Kanalkontur bei minimierten Rüstzeiten, beispielsweise durch Fräsen zweier, einander gegenüberliegender "Zeilen" kostengünstig gefertigt werden, wie dies in Anspruch 2 näher beschrieben ist.

Für eine kostengünstige Fertigung vorteilhaft ist weiter die mit dem Merkmal des Anspruches 3 in Fortfall kommende zusätzliche Rüstzeit, die dadurch entfällt, daß sich die Bahnen die translatorischen Vorschubbewegungen des Werkzeuges im Kanal in einem solchen durch Gießen gebildeten Kanalquerschnitt schneiden, dem der Rotationsdurchmesser des Werkzeuges einbeschrieben werden kann und damit das rotierende Werkzeug lediglich um den von den Bahnen eingeschlossenen Winkel geschwenkt werden muß. Zusätzlich ist damit zwischen dem mechanisch bearbeiteten Kanalteil und dem im Gußzustand belassenen Kanalteil ein glatter, stufenfreier Übergang erreicht.

Je nach Wahl des Rotationsdurchmessers des Werkzeuges und einer eventuellen Berücksichtigung von einer im Kanal vorgesehenen Rippe kann das im Anspruch 4 beschriebene Verfahren vorteilhaft sein, bei dem auf einen ersten Hin- und Rückgang des Werkzeuges ein dazu quergerichteter zweiter Hin- und Rückgang des Werkzeuges vorgesehen ist. Damit kann der am Kanalübergang zum Innenumfang des Ventilsitzringes gewünschte Kreisquerschnitt durch zwei gegeneinander um 90° gedrehte Ovalquerschnitte weitestgehend angenähert werden, wobei bei vier Arbeitsgängen pro Kanal nur geringfügige Strömungsstörstellen verbleiben. Das im Anspruch 4 beschriebene Verfahren hat zudem den Vorteil, daß damit die venturirohrartige Ausgestaltung im Kanal unmittelbar vor dem Ventilsitzring, wie in Bild 166 des eingangs genannten Buches von Prof. Löhner dargestellt, erreicht wird und somit in kostengünstiger Weise übliche, mit zylindrischem Innenumfang ausgebildete Ventilsitzringe verwendet werden können.

Die Erstellung der Kanalkontur kann über das im Anspruch 4 beschriebene "4-zeilige" Bearbeitungsverfahren hinausgehen, wobei es dann vorteilhaft ist, das Werkzeug gemäß Anspruch 5 längs Bahnen auf einer Oberfläche einer die Kontur des Kanals abbildenden Vorlage zu führen. Die Vorlage kann körperlich oder durch Stützstellen in einem Rechner gebildet sein. Eine derartige Vorlage ermöglicht nach Anspruch 6 eine gleichzeitige translatorische und rotatorische Vorschubbewegung des Werkzeuges, so daß z. B. bei Verwendung eines Fräsers hiermit durch "Drehfräsen" eine genaue Kanalkontur erzielt wird. Für einen Kompromiß zwischen einer kostengünstigen Fertigung einerseits und einer strömungsoptimalen Kontur des Kanales andererseits kann das Werkzeug nach Anspruch 7 je nach Bearbeitungsbereich des Kanals entweder translatorische oder translatorische und rotatorische Vorschubbewegungen ausführen.

Das Verfahren ist in der Zeichnung anhand von Anfangs- und Endpositionen und diese verbindende Bahnen eines maschinengeführten Fräsers bei Bearbeitung eines Gaswechselkanals in einem nicht weiter dargestellten gegossenen Zylinderkopf einer Brennkraftmaschine erläutert. Es zeigen:

Fig. 1   einen geschnittenen Gaswechselkanal in Seitenansicht mit Werkzeugpositionen der Bearbeitung zweier einander gegenüberliegender Kanalbereiche,

Fig. 2   den in Fig. 1 gezeigten Kanal in Draufsicht im Schnitt,

Fig. 3   den Gaswechselkanal nach Fig. 1 in Draufsicht mit Werkzeugpositionen der Bearbeitung weiterer zweier einander gegenüberliegender Kanalbereiche,

Fig. 4   den in Fig. 3 gezeigten Kanal in einer mit Fig. 1 übereinstimmenden Seitenansicht,

Fig. 5   einen geschnittenen Gaswechselkanal in Seitenansicht und Draufsicht mit ausgezeichneten Werkzeugpositionen, wobei die Werkzeugbahnen in der Oberfläche einer die Kontur des Kanals abbildenden Kopiervorlage liegen.

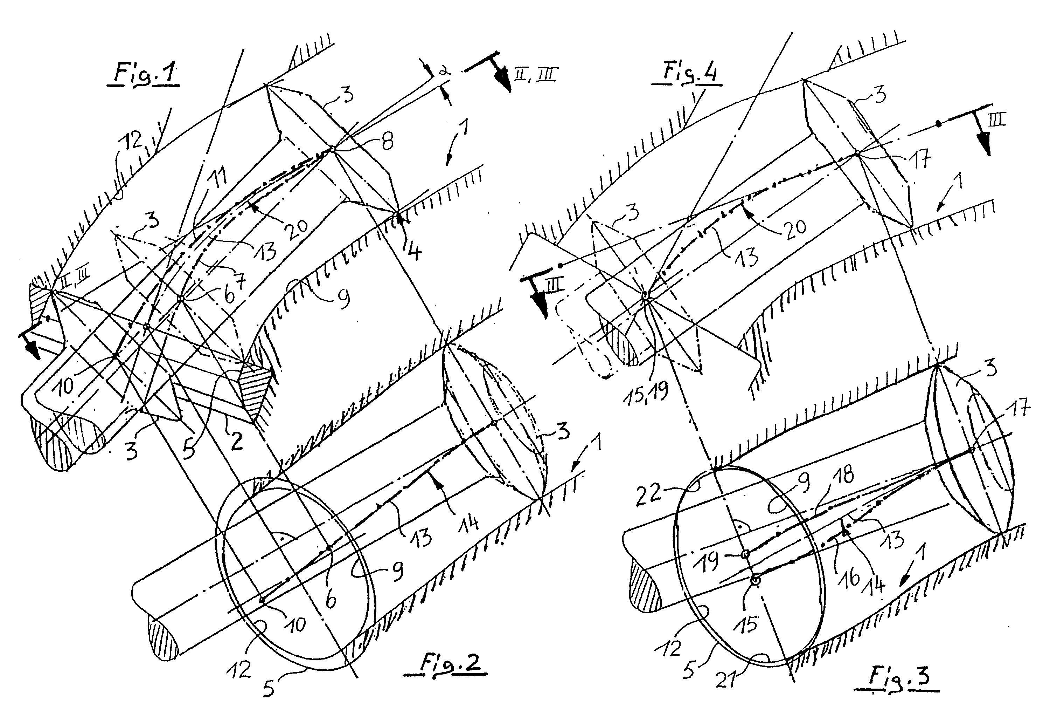

Ein lediglich in seinem ventilseitigen Endbereich dargestellter Gaswechselkanal 1 wird von seinem einem Ventilsitz 2 zugewandten Ende her mit einem rotierenden, fliegend gelagerten und maschinengeführten Fräser 3 bearbeitet. Der Fräser 3 ist in seinem Außendurchmesser (= Rotationsdurchmesser) 4 relativ zum Innendurchmesser 5 des Ventilsitzringes 2 kleiner gewählt. Zu Beginn der spanabhebenden Bearbeitung wird der Fräser 3 in eine Position 6 gebracht und bewegt sich bei translatorischer Vorschubbewegung längs einer Bahn 7 zu einer Position 8. Auf dem Hingang von Position 6 zu Position 8 wird der in Fig. 2 mit 9 bezeichnete Umfangsabschnitt des Gaswechselkanals 1 fertiggestellt.

In Position 8 weist der beispielsweise in Richtung zum anderen Ende sich konisch erweiternde Gaswechselkanal 1 einen solchen Querschnitt auf, dem der Rotationsdurchmesser 4 des Fräsers 3 einbeschrieben werden kann. Dies ermöglicht es, den Fräser 3 in Position 8 derart um einen vorbestimmten Winkel "α" zu schwenken, daß er auf seinem Rückgang von Position 8 zu einer Position 10 längs einer Bahn einen weiteren Umfangsabschnitt 12 des Gaswechselkanals 1 spanabhebend bearbeitet. Die beiden Bahnen 7 und 11 verlaufen gemäß Fig. 2 in einer der Skelettlinie 13 des Gaswechselkanals 1 folgenden Fläche 14. Damit werden mit einem Hingang von 6 nach 8 und einem unmittelbar darauffolgenden Rückgang von 8 nach 10 des Fräsers 3 zwei einander gegenüberliegende Kanalbereiche 9 und 12 fertigbearbeitet.

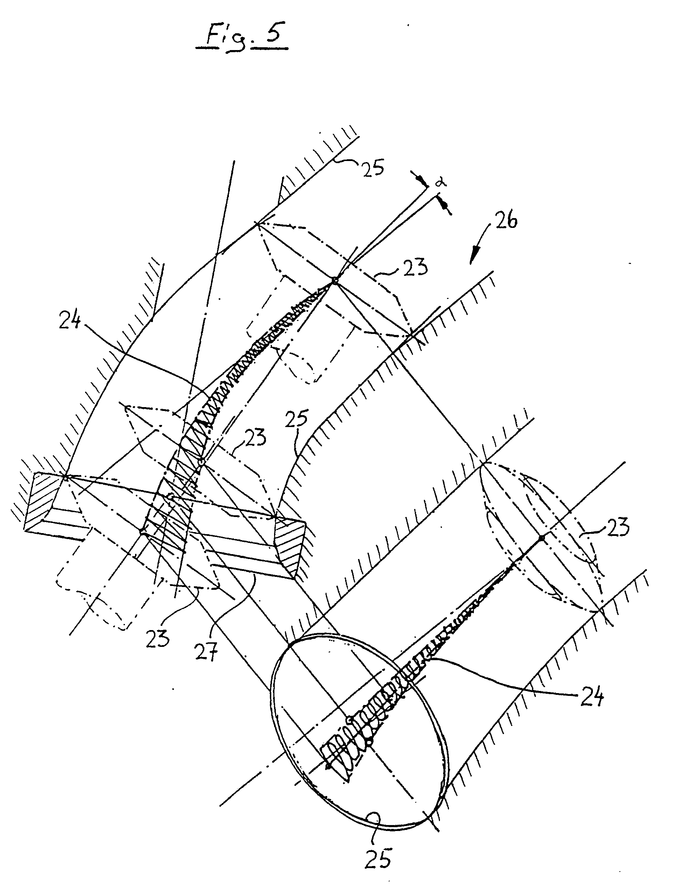

Für die spanabhebende Bearbeitung der übrigen, einander gegenüberliegenden Bereiche des Kanals 1 wird der Fräser 3 zu Beginn gemäß Fig. 3 in eine Position 15 gebracht. Von hier aus wird er bei translatorischer Vorschubbewegung entlang einer Bahn 16 beim Hingang zu einer Position 17 geführt, die der Position 8 in Fig. 1 entspricht bzw. entsprechen kann. Nach einer Schwenkung des Fräsers 3 um einen vorbestimmten Winkel"α" in Position 17 wird der Fräser 3 für einen spanabhebenden Rückgang entlang einer Bahn 18 bei translatorischer Vorschubbewegung zur Position 19 am Ende des Gaswechselkanals 1 geführt. Wie aus Fig. 4 hervorgeht, liegen die beiden Bahnen 16 und 18 in einer Fläche 20, die der aus der Seitenansicht des Kanals erkennbaren Krümmung der Skelettlinie 13 folgt. Zudem ist die Fläche 20 zu der weiter vorne genannten, die Bahnen 7 und 11 enthaltenden Fläche 14 senkrecht ausgerichtet. Nach dem vorbeschriebenen werden somit die zu beiden Seiten der Fläche 14 liegenden Umfangsabschnitte 21 und 22 des Gaswechselkanals 1 unmittelbar aufeinanderfolgend bearbeitet. Mit dem vorbeschriebenen Verfahren wird ein für gute Füllung optimaler Querschnittsverlauf erreicht, was weiter in der Serienfertigung minimale Streuung der Konturen aller Gaswechselkanäle einer Brennkraftmaschine für eine hohe Leistung zur Folge hat.

Bei dem bisher beschriebenen Verfahren wird die Kontur des Gaswechselkanals 1 mit jedem Hingang und Rückgang sozusagen "zeilenweise" erstellt, wobei die für den jeweiligen Hingang und Rückgang festgelegten Bahnen 7 und 16 sowie 11 und 18 als Raumkurven bestimmt sind. Die vorgenannten Bahnen können jedoch auch auf einer Oberfläche einer die Kontur des Kanals 1 abbildenden Vorlage gegeben sein.

Wie aus Fig. 5 hervorgeht, kann ein Fräser 23 bei Führung über eine Oberfläche 24 gleichzeitig eine translatorische und eine rotatorische Vorschubbewegung ausführen und damit gewissermaßen durch "Drehfräsen" die Kontur 25 eines Gaswechselkanals 26 erstellen.

Denkbar ist auch ein gemischtes Verfahren mit "Drehfräsen" in einem den Ventilsitzring 27 benachbarten Kanalbereich und einem "Zeilfräsen" im weiter tieferen Kanalbereich.

## Patentansprüche

1. Verfahren zur spanabhebenden Bearbeitung eines in einem Gußteil angeordneten Kanals, insbesondere eines Gaswechsel-Kanals in einem gegossenen Zylinderkopf einer Brennkraftmaschine, wobei zumindest ein Teil des Kanals von einem Ende her mit einem rotierenden, fliegend gelagerten Werkzeug unter Führung längs einer vorgegebenen Bahn bearbeitet wird, dadurch gekennzeichnet,
   - daß das Werkzeug in aufeinanderfolgenden Bearbeitungen für einander gegenüberliegende Bereiche des Kanals längs einer Bahn für einen Hingang und längs einer davon verschiedenen Bahn für den Rückgang geführt wird,
   - wobei das Werkzeug die Bahnen im Kanal in einem solchen Kanalquerschnitt wechselt, dem der Rotationsdurchmesser des rotierenden Werkzeuges einbeschrieben werden kann.

2. Verfahren nach Anspruch 1, insbesondere zur Bearbeitung eines nach einer gekrümten Skelettlinie verlaufenden Gaswechsel-Kanals vom ventilsitzringseitigen Ende her, dadurch gekennzeichnet,
   - daß das Werkzeug längs Hingangs-Bahnen einerseits der Skelettlinie und längs Rückgangs-Bahnen andererseits der Skelettlinie geführt wird,
   - wobei die jeweiligen Bahnen am ventilsitzringseitigen Ende von der Skelettlinie in Abstimmung auf den Innendurchmesser des Ventilsitzringes beabstandet werden.

3. Verfahren nach Anspruch 1 oder 2, dadurch gekennzeichnet,
   - daß das Werkzeug im Kanal fern des Kanalendes längs Bahnen geführt wird,
   - die sich im Bereich des Kanalquerschnittes mit dem einbeschreibbaren Werkzeug-Rotationsdurchmesser schneiden.

4. Verfahren nach einem oder mehreren der Ansprüche 1 bis 3, dadurch gekennzeichnet,
   - daß das Werkzeug längs ersten Hin- und Rückgangs-Bahnen geführt wird,
   - die in einer - den Kanal in Seitenansicht betrachtet - der Krümung der Skelettlinie folgenden Fläche liegen, und
   - daß das Werkzeug längs zweiten Hin- und Rückgangsbahnen geführt wird,
   - die in einer zur ersten Fläche im wesentlichen senkrechten, dem Verlauf der Skelettlinie folgenden zweiten Fläche liegen.

5. Verfahren nach einem oder mehreren der Ansprüche 1 bis 4, dadurch gekennzeichnet, daß das Werkzeug längs Bahnen auf einer Oberfläche einer die Kontur des Kanals abbildenden Vorlage geführt wird.

6. Verfahren nach Anspruch 5, dadurch gekennzeichnet, daß das Werkzeug gleichzeitig eine translatorische und eine rotatorische Vorschubbewegung ausführt.

7. Verfahren nach einem oder mehreren der Ansprüche 1 bis 6, dadurch gekennzeichnet, daß das Werkzeug sowohl translatorische als auch translatorische und rotatorische Vorschubbewegungen ausführt.

## Claims

1. A method of machining a duct in a casting, more particularly a gas change duct in a cast cylinder head of an internal combustion engine, at least a part of the duct being machined, starting from one end, by a rotating overmounted tool guided along a preset track, characterised in that the tool, during successive operations for machining oppositely-disposed regions of the duct, is guided along one track during an outward journey and a different track during a return journey, the tool changing tracks in the duct when the duct has a cross-section such that the diameter of rotation of the rotating tool can be inscribed therein.

2. A method according to claim 1, more particularly for machining a gas change duct extending along a curved median line, starting from the end near the valve seat ring, characterised in that the tool is guided along outward journeys on one side of the median line and along return journeys on the other side of the median line, the respective tracks being spaced apart at the valve seat ring end of the median line, the spacing being adjusted to the inner diameter of the valve seat ring.

3. A method according to claim 1 or 2, characterised in that the tool in the duct, when remote from the end of the duct, is guided along tracks which intersect in the region of the duct cross-section in which the diameter of rotation of the tool can be inscribed.

4. A method according to one or more of claims 1 to 3, characterised in that the tool is guided along first outward and return tracks which lie on a surface following the curvature of the median line, when the duct is considered in side view, and the tool is guided along second outward and return tracks which lie on a second surface which follows the curve of the median line and is substantially at right angles to the first surface.

5. A method according to one or more of claims 1 to 4, characterised in that the tool is guided along tracks on a surface of a model which simulates the contour of the duct.

6. A method according to claim 5, characterised in that the tool is moved forward simultaneously in translation and in rotation.

7. A method according to one or more of claims 1 to 6, characterised in that the tool is moved forward either in translation or in translation and rotation.

## Revendications

1. Procédé pour usinage par enlèvement de copeaux d'un canal disposé dans une pièce coulée, en particulier d'un canal d'échange de gaz dans une culasse coulée d'un moteur à combustion interne, dans lequel au moins une partie du canal est usinée à partir d'une extrémité avec un outil tournant, monté en porte à faux en étant guidé le long d'une trajectoire prédéterminée, procédé caractérisé en ce que:
   - l'outil est guidé le long d'une trajectoire pour un aller et le long d'une trajectoire différente de la première pour le retour pour des zones du canal se trouvant l'une en face de l'autre,
   - l'outil change de trajectoire dans le canal dans une section transversale telle que le diamètre de révolution de l'outil tournant puisse s'y inscrire.

2. Procédé selon la revendication 1, en particulier pour l'usinage d'un canal d'échange de gaz s'étendant selon une ligne moyenne de profil courbe à partir de l'extrémité située du côté du siège de soupape rapporté, caractérisé en ce que:
   - l'outil est guidé le long des trajectoires d'aller d'une part des lignes moyennes de profil et le long des trajectoires de retour d'autre part des lignes moyennes de profil,
   - chacune des trajectoires à l'extrémité située du côté du siège de soupape rapporté étant à une distance de la ligne moyenne de profil en concordance avec le diamètre intérieur du siège de soupape rapporté.

3. Procédé selon la revendication 1 ou 2, caractérisé en ce que:
   - l'outil est guidé dans le canal loin de l'extrémité du canal le long des trajectoires,

- qui se recoupent dans la zone de la section transversale du canal avec le diamètre de révolution d'outil pouvant s'inscrire.

4. Procédé selon une ou plusieurs des revendications 1 à 3, caractérisé en ce que:
   - l'outil est guidé le long des premières trajectoires d'aller et retour,
   - qui se trouvent dans une surface suivant la courbure de la ligne moyenne de profil - en regardant le canal dans une vue de côté- et
   - l'outil est guidé le long de secondes trajectoires d'aller et retour,
   - qui se trouvent dans une deuxième surface sensiblement perpendiculaire à la première surface, suivant le profil de la ligne moyenne.

5. Procédé selon une ou plusieurs des revendications 1 à 4, caractérisé en ce que l'outil est guidé le long de trajectoires sur une surface d'un gabarit représentant le contour du canal.

6. Procédé selon la revendication 5, caractérisé en ce que l'outil exécute simultanément un mouvement d'avance par translation et par rotation.

7. Procédé selon une ou plusieurs des revendications 1 à 6, caractérisé en ce que l'outil exécute aussi bien des mouvements d'avance par translation que par translation et rotation.

Fig.1

Fig.2

Fig.3

Fig.4

Fig. 5